Europäisches Patentamt

European Patent Office

Office européen des brevets

(11) Veröffentlichungsnummer: **0 436 875 A2**

(12) **EUROPÄISCHE PATENTANMELDUNG**

(21) Anmeldenummer: 90124414.5

(22) Anmeldetag: 17.12.90

(51) Int. Cl.5: **H04H 3/00, H04B 7/26**

(30) Priorität: **10.01.90 DE 4000538**

(43) Veröffentlichungstag der Anmeldung:
**17.07.91 Patentblatt 91/29**

(84) Benannte Vertragsstaaten:
**AT CH DE FR GB IT LI NL SE**

(71) Anmelder: **Rohde & Schwarz GmbH & Co. KG**
**Mühldorfstrasse 15**
**W-8000 München 80(DE)**

(72) Erfinder: **Reitberger, Peter, Dr.Ing.**
**Hagenbacher Strasse 26a**
**W-8000 München 60(DE)**

(74) Vertreter: **Graf, Walter, Dipl.-Ing.**
**Sckellstrasse 1**
**W-8000 München 80(DE)**

(54) **Gleichwellenfunksystem.**

(57) Bei einem Gleichwellenfunksystem, dessen räumlich im Funkgebiet verteilt angeordnete und im wesentlichen auf gleicher Trägerfrequenz sendende Gleichwellensender synchron mit einem Gleichwellen-Nutzsignal moduliert sind, werden mindestens zwei der Gleichwellensender gleichzeitig in einer von der Modulation des Nutzsignales unterschiedlichen Modulationsart mit mindestens einem weiteren Hilfssignal moduliert und mindestens einer der Empfänger besitzt eine Einrichtung zur getrennten Auswertung dieser unterschiedlichen Nutzsignal- und Hilfssignal-Modulationen.

EP 0 436 875 A2

## GLEICHWELLENFUNKSYSTEM

Die Erfindung betrifft ein Gleichwellenfunksystem laut Oberbegriff des Hauptanspruches.

Gleichwellenfunksysteme dieser Art sind bekannt (DE-PS 30 35 679, EP-PS 0 118 710, EP-PS 0 040 731, EP-PS 0 072 984 bzw. DE-OS 32 44 256). All diesen Gleichwellenfunksystemen ist gemeinsam, daß zur Synchronisation der Aussendung der Gleichwellen-Nutzsignale die Nutzsignalaussendung sämtlicher Gleichwellensender unterbrochen werden muß und anschließend dann durch einen gesonderten Meßvorgang von den einzelnen Gleichwellensendern nacheinander Meßsignale ausgesendet und in der Zentrale aus der Zeitdifferenz zwischen dem Aussenden und dem Wiederempfangen dieser Meßsignale Steuersignale zum Einstellen von Verzögerungseinrichtungen erzeugt werden.

Es ist Aufgabe der Erfindung, ein Gleichwellenfunksystem der eingangs erwähnten Art bezüglich seiner Anwendungsmöglichkeit zu erweitern und zu verbessern, insbesondere eine Möglichkeit zu schaffen, die Synchronisation der Aussendung der Gleichwellen-Nutzsignale auch ohne Unterbrechung der Nutzsignalaussendung zu ermöglichen.

Diese Aufgabe wird ausgehend von einem Gleichwellenfunksystem laut Oberbegriff des Hauptanspruches durch dessen kennzeichnende Merkmale gelöst. Vorteilhafte Weiterbildungen insbesondere bezüglich der verschiedenartigsten Anwendungsmöglichkeiten, die dieses neuartige System ermöglicht, ergeben sich aus den Unteransprüchen.

Bei dem erfindungsgemäßen Gleichwellenfunksystem werden nicht nur die Gleichwellen-Nutzsignale über die einzelnen Gleichwellensender im Funkgebiet ausgestrahlt, sondern gleichzeitig, d.h. parallel dazu mit unterschiedlicher Modulation mindestens ein weiteres Hilfssignal. Damit können im Funkgebiet stationäre oder mobile Empfänger, beispielsweise auch mobile Sende/Empfangsgeräte, die mit entsprechenden getrennten Demodulatoren für diese mit unterschiedlicher Modulation ausgestrahlten Nutz- und Hilfssignale ausgestattet sind, nicht nur die Gleichwellen-Nutzsignale ausgewertet werden, sondern die zusätzlichen Hilfssignale ermöglichen insbesondere in der Kombination mit den gleichzeitig empfangenen Nutzsignalen die verschiedenartigsten neuartigen Nutzungen eines solchen Gleichwellenfunksystems. Im einfachsten Fall wird über das Hilfssignal beispielsweise eine zusätzliche Nachricht übertragen. Wenn nur einige ausgewählte Gleichwellensender mit dieser zusätzlichen Nachricht moduliert sind, können in einem ausgewählten Teilbereich des gesamten Funkgebietes lokale Nachrichten ausgestrahlt werden, beispielsweise Warnungen oder Notrufe in örtlich begrenzten Teilgebieten.

Eine andere Möglichkeit besteht darin, über diese Hilfssignale im Empfangsgebiet festzustellen, von welchem jeweiligen Gleichwellensender im Moment gerade ein Hilfssignal empfangen wird, wenn nämlich die Hilfssignale unmittelbar kennzeichnend für die jeweiligen Gleichwellensender sind. In diesem Fall werden die einzelnen Gleichwellensender also mit unterschiedlichen Hilfssignalen moduliert und die Empfänger können über diese Hilfssignale also die jeweiligen Gleichwellensender identifizieren. Eine andere Möglichkeit der Gleichwellensender-Kennzeichnung besteht darin, hierfür den zeitbezug zwischen dem Nutzsignal und dem über denselben Gleichwellensender ausgestrahlten Nutzsignal zu verwenden, indem beispielsweise innerhalb der ersten 100 ms der Aussendung eines Gleichwellen-Nutzsignals in einer vorbestimmten Zeit nach der Startflanke dieses Gleichwellen-Nutzsignals das Hilfssignal ausgesendet wird. Die vorbestimmten Zeitdifferenzen zwischen Startflanke des Nutzsignals und Startflanke des Hilfssignals sind damit unmittelbar kennzeichnend für den jeweiligen Gleichwellensender.

Eine besonders vorteilhafte Anwendungsmöglichkeit des erfindungsgemäßen Gleichwellenfunksystems ist jedoch, daß hiermit erstmals auch unmittelbar während des Aussendens der Gleichwellen-Nutzsignale deren Synchronisation überprüft und gegebenenfalls korrigiert werden kann, wie dies im Anspruch 5 gekennzeichnet ist. Damit ist nicht mehr wie bei den bekannten Gleichwellenfunksystemen zur Synchronisation der Nutzsignalaussendung deren Unterbrechung möglich, denn gemäß der Erfindung erfolgt dieses Aussenden der Nutzsignale und der Meßsignale für die Synchronisation nicht mehr zeitlich nacheinander, sondern vielmehr zeitlich parallel zueinander, also gleichzeitig. Durch entsprechende Auswertung der ständig ausgestrahlten Hilfssignale im Meßempfänger kann damit ständig überwacht werden, ob die Hilfssignale jeweils noch mit derjenigen Zeitdifferenz von den einzelnen Gleichwellensendern abgestrahlt werden wie dies für die synchrone Abstrahlung der Gleichwellen-Nutzsignale nötig ist, da ja auch diese Hilfssignale die gleichen Übertragungsstrecken zwischen Zentrale und den einzelnen Gleichwellensendern und den Funkstrecken zu dem Meßempfänger durchlaufen wie die Gleichwellen-Nutzsignale, eine eventuelle Asynchronität dieser Hilfssignale also unmittelbar auch ein entsprechendes Maß für die Asynchronität der Gleichwellen-Nutzsignale ist, die durch entsprechende Änderung der Verzögerungsglieder in bekannter Weise wieder ausgeglichen werden kann. Diese vorteilhafte Betriebsweise eines erfindungsgemäßen Gleichwellenfunksystems wird dadurch ermöglicht, daß im Meßempfänger bzw. in der diesem zugeordneten Auswerteinrichtung über die Kennzeichnung der einzelnen Hilfssignale die jeweiligen einzelnen Gleichwellensender identifiziert werden können und so auch während des Gleichwellenbetriebes über die Hilfssignale gleichzeitig für sämtliche Gleichwellensender die jeweiligen Laufzeiten in den Übertragungsstrecken gemessen und eventuell kompensiert werden können.

Das erfindungsgemäße Gleichwellenfunksystem bietet auch die Möglichkeit, durch unmittelbaren Eingriff in die Sendeleistung der einzelnen Gleichwellensender bzw. deren Trägerfrequenz bzw. Modulationsgrad Auslöschungszonen im Überlappungsgebiet der Gleichwellensender zu vermeiden. Wenn beispielsweise über einen Meßempfänger in der Überlappungszone von zwei benachbarten Gleichwellensendern durch Interferenz der Feldstärke der beiden Sender eine mehr oder weniger starke Auslöschung des Empfangssignales festgestellt wird, so kann über den mit der Zentrale verbundenen Meßempfänger ein entsprechendes Steuersignal für einen der beiden Sender zur Erhöhung der Senderleistung gegeben werden, durch die Erhöhung der Senderleistung wird damit die Interferenzzone räumlich verschoben und dadurch die Empfangsbedingungen am Ort des Meßempfängers verbessert. Wenn eine solche Steuermöglichkeit in mobilen Empfängern, die im Funkgebiet mit Gleichwelleninformationen versorgt werden sollen, eingebaut ist, kann auf diese Weise jeder einzelne mobile Empfänger für sich jeweils die bestmöglichsten Empfangsbedingungen einstellen.

Für die unterschiedlichen Modulationsarten sind in jedem Gleichwellensender entsprechend unterschiedliche Modulatoren für die jeweilige Modulationsart eingebaut, ebenso in den zugehörigen Empfängern entsprechend gesonderte Demodulatoren. Die Trennung der mit unterschiedlicher Modulation empfangenen Nutz- und Hilfssignale im Empfänger könnte auch mittels einstellbarer Richtantennen erfolgen. Die Art der Modulation für das Nutzsignal bzw. das Hilfssignal wird entsprechend den jeweiligen Anforderungen gewählt, es sind alle üblichen Modulationsarten wie Amplitudenmodulation, Frequenzmodulation oder Phasenmodulation bzw. Kombinationen dieser Modulationsarten für beide Signale geeignet, es ist nur wichtig, daß die beiden Modulationsarten unterschiedlich sind. Für das Hilfssignal bietet sich als Modulationsart auch eine definierte geringe Verschiebung der Trägerfrequenz des Gleichwellensenders an, wobei die Änderungsgeschwindigkeit bzw. die Eckpunkte der Frequenzänderung jeweils die spezifische Signalinformation enthalten, diese geringfügige Trägerfrequenzänderung im Bereich von nur einigen Hz ist als eine Art Trägerfrequenzumtastung nur mit definierter kontinuierlicher Frequenzänderung und nicht mehr sprunghaft.

Die Erfindung wird im folgenden anhand schematischer Zeichnungen an einem Ausführungsbeispiel näher erläutert.

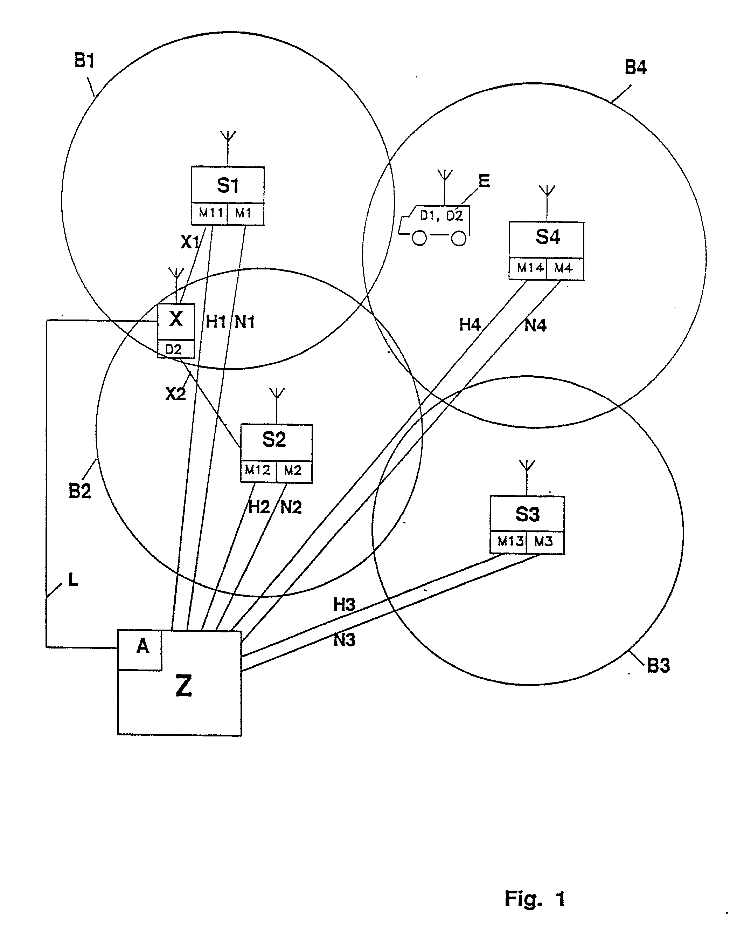

In einem Funkgebiet nach Fig. 1 sind vier Gleichwellensender S1 bis S4 derart räumlich verteilt angeordnet, daß sich deren einzelne Funkbereiche B1 bis B4 geringfügig überlappen. In diesen Funkbereichen operieren mobile Funkstationen E, die damit Gleichwellen-Nutzsignale mindestens eines dieser Gleichwellensender S1 bis S4 empfangen können. Die Gleichwellensender senden im wesentlichen auf gleicher Trägerfrequenz, sie strahlen die Nutzsignale synchron ab, die Synchronisation erfolgt in bekannter Weise beispielsweise nach DE-PS 30 35 679 unter Zuhilfenahme eines zentralen Meßempfängers X, der mit der Zentrale Z verbunden ist und in welcher über den Verbindungsleitungen N1 bis N4 zugeordnete Verzögerungseinrichtungen Synchronität hergestellt wird. Die Gleichwellen-Nutzsignale N werden den einzelnen Sendern beispielsweise über Kabelstrecken N1 bis N4 zugeführt, in der Zentrale Z bzw. in den einzelnen Sendern S1 bis S4 sind Verzögerungseinrichtungen vorgesehen, die in bekannter Weise so eingestellt werden, daß die einzelnen Sender S1 bis S4 die Gleichwellen-Nutzsignale N jeweils synchron abstrahlen. Die Modulation der Sender S1 bis S4 mit den Gleichwellen-Nutzsignalen erfolgt in den Sendern S1 bis S4 jeweils über Modulatoren M. Für ein Gleichwellenfunksystem zur Versorgung von mobilen Sende/Empfangs-Geräten E im Funkgebiet wird für die Modulation der Gleichwellen-Nutzsignale im allgemeinen eine Frequenzmodulation benutzt.

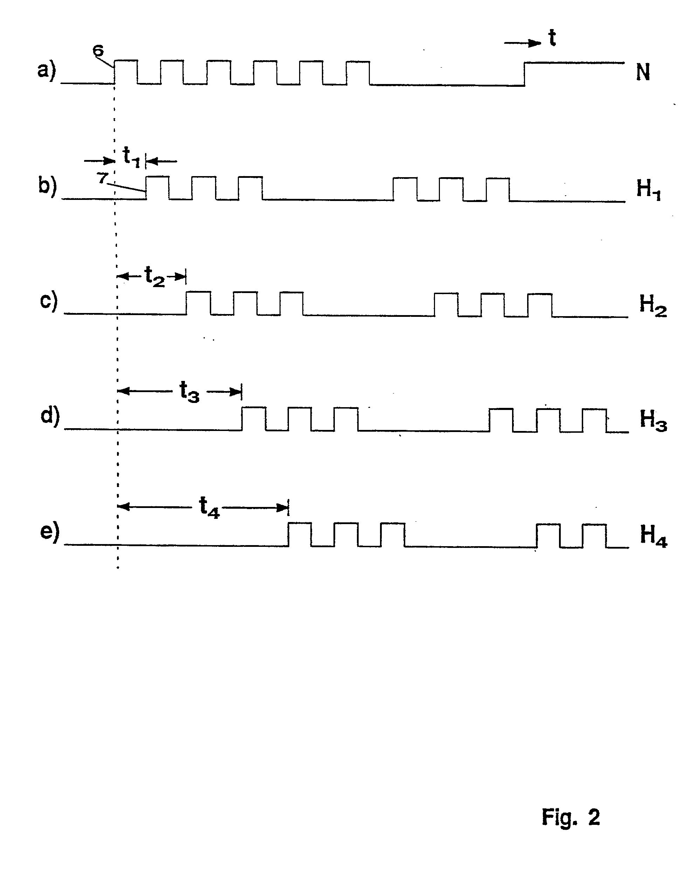

Gemäß der Erfindung werden die Sender S1 bis S4 zusätzlich und gleichzeitig noch mit einem weiteren Hilfssignal H moduliert und zwar in einer anderen Modulationsart. Diese Hilfssignale werden beispielsweise wiederum von der Zentrale Z den einzelnen Sendern über gesonderte Kabelstrecken H1 bis H4 zugeführt, anstelle von gesonderten Leitungen könnte die Übertragung auch dieser Hilfssignale beispielsweise auch über die gleichen Kabelstrecken N1 bis N4 der Nutzsignale erfolgen, sofern für eine entsprechende getrennte Übertragung der Nutz- und Hilfssignale gesorgt ist. In jedem Sender S1 bis S4 wird über einen zweiten Modulator M11 bis M14 die Trägerfrequenz der einzelnen Sender S1 bis S4 in einer anderen Modulationsart mit diesen Hilfssignalen H1 bis H4 moduliert, beispielsweise in Amplitudenmodulation. Die Hilfssignale H1 bis H4 können Nachrichtensignale sein, so daß in den einzelnen Empfängern E einerseits über einen FM-Demodulator D1 die Gleichwellen-Nutzsignale und über einen AM-Demodulator D2 die gleichzeitig übertragenen Hilfssignale ausgewertet werden können. Der Informationsinhalt der Hilfssignale, beispielsweise Digitalsignale, ist unmittelbar kennzeichnend für jeden der vier Gleichwellensender S1 bis S4, d.h. aus dem digitalen Datenstrom der Hilfssignale H1 bis H4 kann jeder Empfänger unmittelbar erkennen, von welchem der Sender S1 bis S4 das empfangene Hilfssignal stammt. Die Senderkennung kann jedoch auch in der Zuordnung zwischen Nutzsignal N und zugehörigem Hilfssignal H1 bis H4 liegen, wie dies Fig. 2 schematisch zeigt. Fig. 2a) zeigt das Gleichwellen-Nutzsignal, das in diesem Beispiel als Digitalsignal mit einer vorbestimmten genormten Datenfolge beginnend mit einer Startflanke 6 über alle Sender S1 bis S4 gleichzeitig abgestrahlt wird. Fig. 2b) zeigt in zeitlicher Zuordnung dazu die Aussendung des in diesem Beispiel wiederum als Digitalsignal ausgesendeten Hilfssignals mit der Startflanke 7. Die Startflanke 7 des Hilfssignals H1 für den Sender S1 ist beispielsweise um eine vorbestimmte Zeit t1 von beispielsweise 100 µs gegenüber der Startflanke 6 verzögert, das Hilfssignal H1 für den Sender S2 laut Fig. 2c) um die Zeit t2, beispielsweise 200 µs usw. Damit kann unmittelbar am Empfänger E durch Vergleich der Gleichwellen-Nutzsignale N mit den jeweils empfangenen Hilfssignalen H1 bis H4 festgestellt werden, von welchem der Sender S1 bis S4 die gleichzeitig empfangenen Hilfssignale H1 bis H4 stammen.

Die Erkennung der einzelnen Sender S1 bis S4 ermöglicht auf einfache Weise die Synchronisation der einzelnen Gleichwellensender für die synchrone Abstrahlung der Gleichwellen-Nutzsignale N. Dies erfolgt über den stationären Meßempfänger X der über eine Übertragungsstrecke L, beispielsweise wieder eine Kabelstrecke, mit einer Auswerteinrichtung A in der Zentrale Z verbunden ist, die es ermöglicht, die gleichzeitig empfangenen Hilfssignale H1 bis H4 einzeln zu identifizieren, d.h. festzustellen, welchem Sender S1 bis S4 jeweils eines der empfangenen Hilfssignale H1 bis H4 zuzuordnen ist. Der Meßempfänger X besitzt wieder einen Demodulator D2 für die Auswertung der Hilfssignale H1 bis H4 (z.B. wieder einen Amplituden-Demodulator). Der Meßempfänger X empfängt beispielsweise im Zeitpunkt x1 das Hilfssignal H1 des Senders S1 und im Zeitpunkt x2 das Signal H2 des Senders S2. Die Zeitdifferenz δx zwischen diesen beiden Zeitpunkten x1 und x2 ist damit unmittelbar ein Maß dafür, welche Verzögerung die Hilfssignale bei ihrer Übertragung aus der Zentrale Z zu den Sendern S1 bzw. S2 und schließlich zu dem Meßempfänger X erfahren haben. Da über die gleiche Übertragungsstrecke die Gleichwellen-Nutzsignale N übertragen werden, ist diese über den Meßempfänger X gemessene Zeitbeziehung zwischen den Hilfssignalen H1 bis H4 die gleiche wie die entsprechende Zeitbeziehung der über die Sender S1 bis S4 ausgestrahlten Gleichwellen-Nutzsignale N, das Ergebnis dieser Hilfssignal-Messung kann deshalb unmittelbar zur Einstellung der Verzögerungsglieder in der Zentrale Z bzw. am Ort der einzelnen Sender S1 bis S4 ausgenutzt werden um Synchronität zwischen den ausgestrahlten Gleichwellen-Nutzsignalen herbeizuführen.

In ähnlicher Weise können auch andere radiotechnische Parameter der einzelnen Gleichwellensender gesteuert werden, beispielsweise die Leistung der einzelnen Gleichwellensender. Wenn in der Überlappungszone zwischen den Sendern S1 und S2 durch einen Empfänger X beispielsweise eine starke Verringerung der Feldstärke durch Interferenz festgestellt wird, kann über die Zentrale Z beispielsweise die Leistung des Senders S2 geringfügig erhöht werden, so daß dann die Interferenzzone sich örtlich etwas verschiebt und so zumindest am Ort des Empfängers X wieder bessere Empfangsbedingungen herrschen. In gleicher Weise können durch entsprechende Veränderung der Trägerfrequenz oder des Modulationsgrades der Gleichwellensender die Empfangsbedingungen verändert und verbessert werden.

**Patentansprüche**

1. Gleichwellenfunksystem, dessen räumlich im Funkgebiet verteilt angeordnete und im wesentlichen auf gleicher Trägerfrequenz sendende Gleichwellensender (S1 bis S4) synchron mit einem Gleichwellen-Nutzsignal (N) moduliert sind, dadurch **gekennzeichnet**, daß mindestens zwei der Gleichwellensender (S1 bis S4) gleichzeitig in einer von der Modulation (M1) des Nutzsignales (N) unterschiedlichen Modulationsart (M11 bis M14) mit mindestens einem weiteren Hilfssignal (H1 bis H4) moduliert sind und mindestens einer der Empfänger (E, X) eine Einrichtung (D1, D2) zur getrennten Auswertung dieser unterschiedlichen Nutzsignal- und Hilfssignal-Modulationen aufweist.

2. System nach Anspruch 1, dadurch **gekennzeichnet**, daß das Hilfssignal (H1 bis H4) zur Kennzeichnung des dieses Hilfssignal jeweils aussendenden Gleichwellensenders (S1 bis S4) dient.

3. System nach Anspruch 2, dadurch **gekennzeichnet**, daß die Senderkennzeichnung durch den Informationsinhalt des aufmodulierten Hilfssignales (H1 bis H4) gebildet ist.

4. System nach Anspruch 2, dadurch **gekenn-**

zeichnet, daß die Senderkennzeichnung durch den Zeitbezug (t1, t2) zwischen dem Nutzsignal (N) und dem Hilfssignal (H1 bis H4) gebildet ist.

5. System nach einem der vorhergehenden Ansprüche, bei dem die Nutzsignale (N) von einer gemeinsamen Zentrale (Z) den einzelnen Gleichwellensendern (S1 bis S4) über gesonderte Übertragungsstrecken (N1 bis N4), insbesondere Kabelstrecken zugeführt werden und bei dem über diese Übertragungsstrecken außerdem Meßsignale zuführbar sind, die nach Aussendung durch die Gleichwellensender in mindestens einem Meßempfänger (X) empfangen und in einer Auswerteinrichtung (A) ausgewertet werden, wobei in Abhängigkeit von der Zeitdifferenz zwischen dem Aussenden und dem Empfangen dieser Meßsignale durch die einzelnen Gleichwellensender mittels Verzögerungseinrichtungen die Aussendung der Nutzsignale (N) in den Gleichwellensendern synchronisiert wird, dadurch gekennzeichnet, daß die Meßsignale durch die gleichzeitig mit den Nutzsignalen ausgesendeten Hilfssignale (H1 bis H4) gebildet sind, in der Auswerteinrichtung (A) aus der Kennzeichnung der im Meßempfänger (X) empfangenen Hilfssignale deren Zuordnung zu den jeweiligen Gleichwellensendern (S1 bis S4) ermittelt wird und die Synchronisierung der Nutzsignale (N) in Abhängigkeit von der Zeitdifferenz (δx) erfolgt, die zwischen dem Empfang der Hilfssignale (H1 bis H4) der zugehörigen Gleichwellensender (S1 bis S4) ermittelt wird.

6. System nach einem der vorhergehenden Ansprüche, dadurch gekennzeichnet, daß das Hilfssignal (H1 bis H4) zur Nachrichtenversorgung eines räumlich begrenzten Teilbereiches des Gesamtfunkgebietes dient und nur den diesen Teilbereich versorgenden Gleichwellensendern zusätzlich aufmoduliert ist.

7. System nach einem der vorhergehenden Ansprüche, dadurch gekennzeichnet, daß in einem mit der Zentrale bzw. den Gleichwellensendern verbundenen Empfänger aus der Kennzeichnung der durch den Empfänger empfangenen Hilfssignale (H1 bis H4) deren Zuordnung zu den jeweiligen Gleichwellensendern (S1 bis S4) ermittelt wird und aus der örtlichen Feldstärke der sich überlappenden benachbarten Gleichwellensender jeweils Steuergrößen für die Senderleistung und/oder Trägerfrequenz und/oder Modulationsgrad dieser Gleichwellensender ermittelt werden.

8. System nach einem der vorhergehenden Ansprüche, dadurch gekennzeichnet, daß die Gleichwellen-Nutzsignale dem Träger der Gleichwellensender in Amplitudenmodulation und die Hilfssignale in Frequenzmodulation, Phasenmodulation oder einer Kombination aus Amplitudenmodulation, Frequenzmodulation und Phasenmodulation aufmoduliert ist.

9. System nach einem der vorhergehenden Ansprüche, dadurch gekennzeichnet, daß das Gleichwellen-Nutzsignal dem Träger der Gleichwellensender in Frequenzmodulation und das Hilfssignal in Amplitudenmodulation, Phasenmodulation oder einer Kombination aus Amplitudenmodulation, Frequenzmodulation und Phasenmodulation aufmoduliert ist.

10. System nach einem der vorhergehenden Ansprüche, dadurch gekennzeichnet, daß das Gleichwellen-Nutzsignal dem Träger der Gleichwellensender in Phasenmodulation und das Hilfssignal in Amplitudenmodulation, Frequenzmodulation oder einer Kombination aus Amplitudenmodulation, Frequenzmodulation und Phasenmodulation aufmoduliert ist.

11. System nach einem der vorhergehenden Ansprüche, dadurch gekennzeichnet, daß das Gleichwellen-Nutzsignal dem Träger der Gleichwellensender in einer Kombination aus Amplitudenmodulation, Frequenzmodulation und Phasenmodulation und das Hilfssignal in Amplitudenmodulation, Frequenzmodulation oder Phasenmodulation oder einer anderen Kombination aus Amplitudenmodulation, Frequenzmodulation und Phasenmodulation aufmoduliert ist.

12. System nach einem der vorhergehenden Ansprüche, dadurch gekennzeichnet, daß das Gleichwellen-Nutzsignal in Amplitudenmodulation, Frequenzmodulation, Phasenmodulation oder einer Kombination aus diesen Modulationsarten und das Hilfssignal durch definierte geringfügige Änderung der Trägermittenfrequenz der Gleichwellensender aufmoduliert ist.

Fig. 1

a) N

b) $H_1$

c) $H_2$

d) $H_3$

e) $H_4$

$t_1$, $t_2$, $t_3$, $t_4$

Fig. 2